# FASCICULE DE BREVET EUROPEEN

(11) **EP 2 313 650 B1**
(45) Date de publication et mention de la délivrance du brevet: **13.07.2016**
(21) Numéro de dépôt: 09784298.3
(22) Date de dépôt: 24.07.2009
(51) Int. Cl.: F03D 5/00, F03D 80/00, F04B 17/00, F04B 43/04, F03D 5/06, F03B 17/06

(54) **GENERATEUR D'ENERGIE**
ENERGIEERZEUGER
ENERGY GENERATOR

(30) Priorité: 01.08.2008 FR 0804388
(43) Date de publication de la demande: 27.04.2011
(73) Titulaire: Drevet, Jean Baptiste, 75005 Paris (FR)
(72) Inventeur: Drevet, Jean Baptiste, 75005 Paris (FR)
(74) Mandataire: Parzy, Benjamin Alain
(86) Numéro de dépôt international: PCT/FR2009/000920
(87) Numéro de publication internationale: WO 2010/012888

(56) Documents cités:
- WO-A-82/00321
- FR-A- 2 891 321
- FR-A- 2 891 322
- FR-A- 2 893 991
- US-A1- 2002 146 333

## Description

L'invention est relative à un générateur d'énergie, comme de l'électricité, à partir d'un fluide en mouvement tel qu'un aérogénérateur (ou éolienne) ou une hydraulienne, c'est-à-dire un appareil capable de convertir, notamment en énergie électrique, l'énergie d'un fluide en mouvement.

### ARRIERE-PLAN DE L'INVENTION

Divers aérogénérateurs ont été proposés. La plupart des aérogénérateurs comportent une hélice tournante mise en rotation par le vent et qui entraîne un dispositif de production d'électricité.

Il est connu, notamment du document WO82/00321, un aérogénérateur qui comporte une membrane disposée entre deux flasques formant un conduit aérien entre lesquels une membrane est maintenue tendue selon une direction inscrite dans le plan de la membrane et perpendiculaire à la direction du flux d'air pour être soumise à des déformations transversales sous l'action du vent passant entre les flasques. La membrane est en tissu et comporte des lattes qui sont disposées le long de deux bords opposés de la membrane et qui sont rattachées à un bâti support par des tirants. Sous l'action du vent passant entre les deux flasques, la membrane devient le support d'une vibration transversale et le mouvement transversal de la partie centrale de la membrane est utilisé pour actionner un dispositif de production d'électricité.

### OBJET DE L'INVENTION

L'invention a pour objet un générateur à membrane de rendement amélioré.

### BREVE DESCRIPTION DE L'INVENTION

En vue de la réalisation de ce but, on propose un générateur d'énergie à partir d'un fluide en mouvement, comportant un conduit dont les parois comportent deux flasques entre lesquels une membrane est disposée pour être soumise à l'action d'un flux de fluide pénétrant entre les deux flasques, caractérisé en ce que les deux flasques sont divergents pour provoquer une déformation de la membrane sous l'action du flux de fluide selon une onde progressive qui se déplace d'un bord d'attaque de la membrane à un bord de fuite de la membrane de sorte que le bord de fuite de la membrane soit animé d'un mouvement oscillant transversal, des moyens d'exploitation du mouvement du bord de fuite étant attelés audit bord de fuite.

L'action du fluide amplifie dans sa progression une onde progressive qui se déplace d'un bord d'attaque de la membrane situé à l'entrée du conduit vers un bord de fuite de la membrane situé à la sortie du conduit de sorte que le bord de fuite de la membrane soit animé d'un mouvement oscillant transversal actionnant les moyens d'exploitation qui sont par exemple des moyens de production électrique. Le couplage du fluide avec la membrane ondulante crée un champ de pression progressant avec les ondes et un champ de résultantes de forces de pression appliqué à la membrane et progressant avec le régime d'ondes. Les flasques renforcent les forces résultantes des différentiels de pression. L'énergie mécanique du fluide est transmise à la membrane du fait du travail des forces de pression en fonction de la vitesse de propagation des ondes ceci avec une diminution de la pression moyenne du fluide dans le corps de l'éolienne. La vitesse de propagation des ondes est modulée et optimisée pour récupérer le maximum d'énergie du fluide, ceci par les moyens de tension de la membrane. Les ondes progressives correspondent à la circulation sur la membrane d'une énergie mécanique, énergie de déformation et énergie cinétique. Ces ondes se renforcent mécaniquement dans leur progression suite au transfert d'énergie mécanique du fluide vers la membrane, ce qui conduit à un accroissement de l'amplitude de déformation si les caractéristiques mécaniques de la membrane varient peu suivant la longueur de la membrane ; la variation d'amplitude pourra être plus faible si les caractéristiques mécaniques évoluent suivant la longueur de membrane. Le résultat du transfert d'énergie du fluide de la membrane se retrouve dans un différentiel de pression entre l'entrée et la sortie du conduit, la puissance transmise étant le produit du différentiel de pression par le débit du fluide. Les champs de pression progressant de part et d'autre de la membrane relient les pressions d'entrée à la pression de sortie du conduit. Au niveau du bord de fuite, l'onde qui arrive cumule la totalité de l'énergie mécanique transférée du fluide vers la membrane sur son parcours, le bord de fuite de la membrane actionne les moyens de production électrique qui transforme l'énergie mécanique en énergie électrique.

Cette technologie de générateur offre différents avantages comme un fort rendement aéraulique ou hydraulique, un meilleur rendement en fonctionnement instantané, ceci même à faible débit de fluide du fait d'une bonne occlusivité quelque soit le débit. Ce générateur offre aussi un meilleur rendement sur une durée d'utilisation, du fait de sa faible inertie et de son faible temps de réponse qui lui permettent de récupérer l'énergie du flux de fluide même si la vitesse de celui-ci est faible, de s'adapter à de fortes vitesses de vent, et de suivre les variations de vitesse lors des rafales.

### BREVE DESCRIPTION DES DESSINS

- la figure 1 est une vue schématique en coupe longitudinale d'un aérogénérateur conforme au principe de l'invention ;
- la figure 2 est une vue en perspective écorchée d'un aérogénérateur selon un premier mode particulier de réalisation de l'invention ;
- la figure 3 est une vue en perspective éclatée d'un aérogénérateur selon un deuxième mode particulier de réalisation de l'invention ;
- la figure 4 est une vue en perspective éclatée d'une variante du deuxième mode particulier de réalisation de l'invention ;
- la figure 5 est une vue en perspective éclatée d'un aérogénérateur selon un troisième mode particulier de réalisation de l'invention.

### DESCRIPTION DETAILLEE DE L'INVENTION

Le générateur d'électricité de l'invention est agencé pour produire de l'électricité à partir d'un fluide en mouvement. Dans la description qui suit, le fluide considéré est l'air, de sorte que le générateur décrit est un aérogénérateur. Il va néanmoins de soi que l'invention s'applique à des générateurs produisant de l'électricité à partir d'autres fluides et par exemple de l'eau.

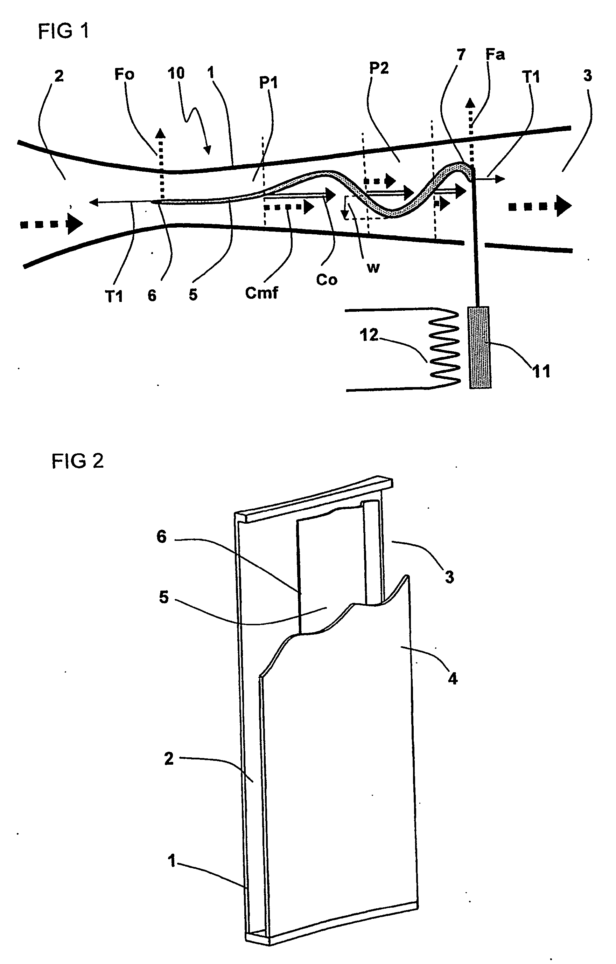

Le principe de l'invention va être expliqué en liaison avec la figure 1.

En référence à la figure 1, le générateur conforme à l'invention comprend une membrane ondulante 5 disposée dans un corps 10 du générateur délimitant un conduit pour un flux d'air entre une entrée 2 et une sortie 3 du corps 10 du générateur.

La membrane 5 a un bord d'attaque 6 et un bord de fuite 7, respectivement à l'entrée 2 et à la sortie 3 du corps 10. Le bord de fuite 7 est relié à un dispositif de production électrique.

Le bord d'attaque 6 de la membrane 5 est soumis à une tension T1 et le bord de fuite 7 est soumis à une tension T2 de sorte que la membrane va onduler sous l'effet d'un flux d'air circulant dans le passage. Les tensions T1 et T2 sont déterminées en fonction de la vitesse souhaitée de propagation des ondes de la membrane 5, la différence des valeurs de tension déterminant la résistance de la membrane au flux d'air, résultante des forces de pressions projetées sur l'axe longitudinal parallèle au sens du vent.

La membrane 5 est disposée dans une partie divergente du corps 10. Cette partie est conformée pour épouser l'enveloppe de l'amplitude des ondes lors de leur progression. Les caractéristiques mécaniques de la membrane concourront à ce que la vitesse de propagation de l'onde soit toujours inférieure à la vitesse du fluide traversant le corps.

Le générateur de l'invention va maintenant être décrit plus en détail.

Le générateur illustré à la figure 2 comporte un corps 10 ayant deux flasques 1 verticaux disposés en regard l'un de l'autre pour être divergents depuis une entrée 2 du générateur vers une sortie 3 du générateur. Les flasques 1 délimitent ainsi un conduit et ont des bords qui s'étendent entre l'entrée 2 et la sortie 3 et qui sont reliés par des parois.

Entre les flasques 1, s'étend une membrane 5 qui présente un bord d'attaque 6 du côté de l'entrée 2 du générateur, et un bord de fuite 7 du côté de la sortie 3 du générateur. Ici, la membrane 5 est constituée d'une feuille de matériau déformable au moins en flexion autour d'un axe vertical. Il peut s'agir de tissu, de matériaux composites, ou encore d'élastomère. Des moyens de tension symbolisés par les flèches 8 de la figure 2 agissent sur le bord d'attaque 6 et le bord de fuite 7 de la membrane 5 pour maintenir celle-ci tendue dans un plan vertical. Sous l'action du vent canalisé par les flasques 1, la membrane 5 se met à osciller et devient le siège d'une onde progressive qui se propage le long de la membrane entre le bord d'attaque 6 et le bord de fuite 7. Alors que le mouvement transversal au niveau du bord d'attaque 6 (symbolisé par la flèche double) reste relativement petit, le mouvement transversal au niveau du bord de fuite 7 est lui important et peut actionner des moyens de production électrique. Le bord de fuite 7 est relié à un noyau 11 muni d'aimants permanents pour déplacer ledit noyau 11 à l'intérieur d'une bobine 12, ce qui a pour effet de produire aux bornes de la bobine 12 un courant électrique.

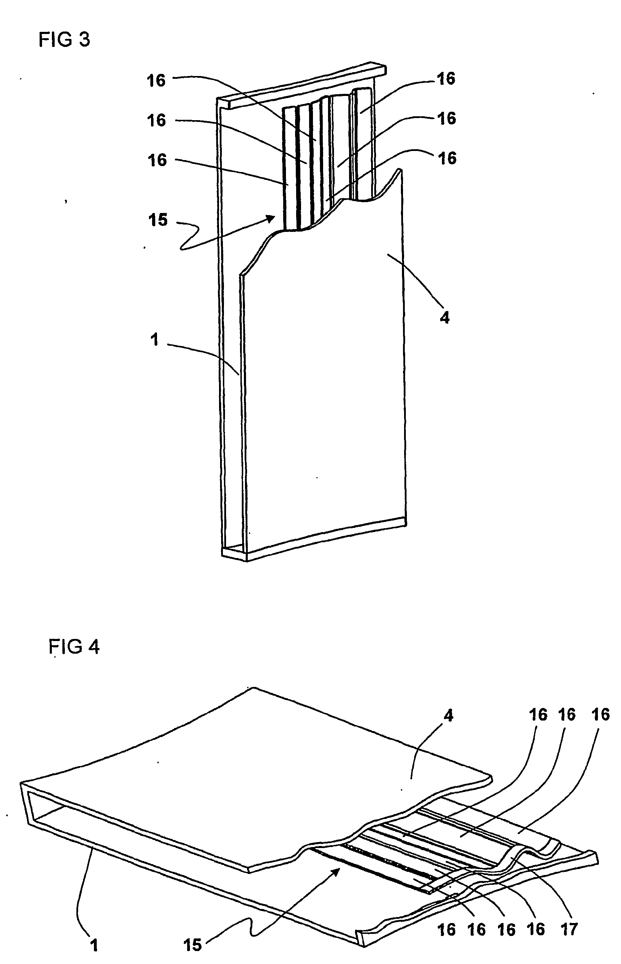

Le générateur illustré à la figure 3 ressemble à celui illustré aux figures 1 et 2, si ce n'est que la membrane 15 est maintenant constituée de lamelles 16 articulées entre elles selon un axe vertical. La membrane 15 se comporte globalement comme la membrane 5 et est le support d'une onde progressive qui se déplace du bord d'attaque au bord de fuite de la membrane.

Le générateur illustré sur la figure 4 ressemble à celui illustré sur la figure 3, si ce n'est que la membrane 15 est constituée de lamelles 16 fixée sur une structure déformable, ici un élément élastique support des ondes progressives engendrées par le flux d'air. Les caractéristiques de l'élément élastique pourront avantageusement évoluer suivant la longueur utile de la membrane de façon à optimiser la vitesse de propagation des ondes vis-à-vis du flux d'air. L'élément élastique portera aussi les points d'attaches pour appliquer la tension et pour être attelé au générateur électrique. L'élément élastique est ici composé de deux lattes 17 dans lesquelles sont enchâssées les extrémités des lamelles 16.

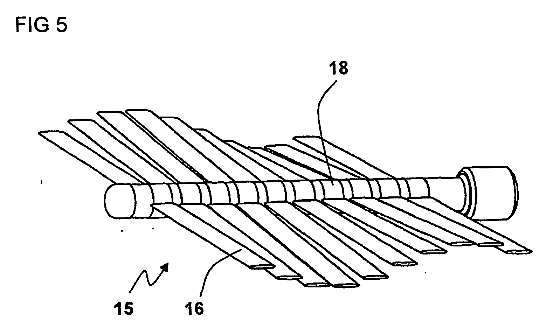

Dans le générateur illustré sur la figure 5, les lamelles 16 sont fixées par leur centre à l'élément élastique qui est ici formé d'une barre de torsion élastique 18 support des ondes progressives qui prennent la forme d'un mouvement oscillant angulaire de sorte que l'amplitude d'oscillation de l'onde progressive est une amplitude angulaire.

Les caractéristiques de la barre de torsion élastique 18 peuvent aussi évoluer suivant la longueur utile de la membrane. Dans cet exemple, le générateur transforme en énergie électrique le produit couple par vitesse angulaire de la barre de torsion 18.

L'invention n'est pas limitée à ce qui vient d'être décrit, mais englobe au contraire toute variante entrant dans le cadre défini par les revendications.

Le générateur peut fonctionner verticalement comme présenté, mais également horizontalement.

En particulier, dans les modes de réalisation illustrés, on pourra prévoir d'équiper le générateur d'un actionneur d'impulsion attelé au bord d'attaque de la membrane dont la fonction est d'initier un mouvement ondulatoire de la membrane, ce qui facilite l'établissement du régime d'ondes progressives lorsque la membrane est soumise à l'action du flux de fluide.

La membrane peut avoir différentes structures et être constituée d'une feuille de matériau déformable élastique ou non, d'une pluralité de lamelles articulées entre elles directement ou fixées sur une structure déformable élastique ou non...

Les moyens de production d'électricité peuvent être remplacés par d'autres moyens d'exploitation du mouvement de la membrane, comme des moyens mécaniques.

Il est possible de rajouter en amont et/ou en aval du conduit des déflecteurs pour agir sur la puissance aéraulique ou hydraulique fournie par le fluide notamment pour augmenter la différence de pression entre l'entrée et la sortie du conduit. Par exemple, un déflecteur 19 (représenté sur la figure 1) est monté à l'entrée du conduit pour augmenter la quantité de fluide s'engageant dans le conduit.

## Revendications

1. Générateur d'énergie à partir d'un fluide en mouvement, comportant un conduit dont les parois comportent deux flasques (1) entre lesquels une membrane (5 ;15) est disposée pour être soumise à l'action d'un flux de fluide pénétrant entre les deux flasques, **caractérisé en ce que** les deux flasques sont divergents pour provoquer une déformation de la membrane sous l'action d'un flux de fluide selon une onde progressive qui se déplace d'un bord d'attaque (6) de la membrane à un bord de fuite (7) de la membrane de sorte que le bord de fuite de la membrane soit animé d'un mouvement oscillant transversal, des moyens d'exploitation de ce mouvement (11, 12) étant attelés audit bord de fuite.

2. Générateur selon la revendication 1, dans lequel la membrane (5) est constituée d'une feuille de matériau déformable.

3. Générateur selon la revendication 1, dans lequel la membrane (5) est constituée d'une feuille de matériau déformable élastique.

4. Générateur selon la revendication 1, dans lequel la membrane (15) comprend une pluralité de lamelles (16) articulées entre elles.

5. Générateur selon la revendication 1, dans lequel la membrane (15) comprend une pluralité de lamelles (16) fixées sur une structure déformable support de l'onde progressive.

6. Générateur selon la revendication 5, dans lequel la structure déformable est élastique.

7. Générateur selon la revendication 5, dans lequel la structure déformable est oscillante autour d'un axe.

8. Générateur selon la revendication 1, comprenant un déflecteur (19) monté en amont et/ou en aval du conduit pour augmenter une puissance fournie par le fluide.

## Patentansprüche

1. Energieerzeuger zur Erzeugung von Energie aus einem sich bewegenden Fluid, umfassend eine Leitung, deren Wände zwei Seitenplatten (1) umfassen, zwischen denen eine Membran (5; 15) angeordnet ist, um der Wirkung eines Fluidflusses ausgesetzt zu werden, der zwischen die beiden Seitenplatten eindringt, **dadurch gekennzeichnet, dass** die beiden Seitenplatten divergierend sind, um eine Verformung der Membran unter der Wirkung eines Fluidflusses gemäß einer fortschreitenden Welle zu verursachen, die sich von einer Angriffskante (6) der Membran zu einer Abströmkante (7) der Membran verschiebt, so dass die Abströmkante der Membran in eine transversale schwingende Bewegung versetzt wird, wobei Mittel zur Nutzung dieser Bewegung (11, 12) an die Hinterkante gekoppelt sind.

2. Erzeuger nach Anspruch 1, wobei die Membran (5) aus einem Blatt aus verformbaren Material gebildet ist.

3. Erzeuger nach Anspruch 1, wobei die Membran (5) aus einem Blatt aus elastischem verformbarem Material gebildet ist.

4. Erzeuger nach Anspruch 1, wobei die Membran (15) eine Vielzahl von Lamellen (16) umfasst, die aneinander angelenkt sind.

5. Erzeuger nach Anspruch 1, wobei die Membran (15) eine Vielzahl von Lamellen (16) umfasst, die an einer verformbaren Trägerstruktur der fortscheitenden Welle befestigt sind.

6. Erzeuger nach Anspruch 5, wobei die verformbare Struktur elastisch ist.

7. Erzeuger nach Anspruch 5, wobei die verformbare Struktur um eine Achse schwingt.

8. Erzeuger nach Anspruch 1, umfassend einen Deflektor (19), der stromaufwärts und/oder stromabwärts der Leitung angebracht ist, um eine von dem Fluid gelieferte Leistung zu erhöhen.

## Claims

1. A generator for generating energy from a moving fluid, the generator comprising a duct of walls that include two faceplates (1) between which a diaphragm (5; 15) is placed so as to be subjected to the action of a stream of fluid penetrating between the two faceplates, the generator being **characterized in that** the two faceplates diverge so as to cause the diaphragm to deform under the action of a stream of fluid in the form of a traveling wave that moves from a leading edge (6) of the diaphragm towards a trailing edge (7) of the diaphragm so that the trailing edge of the diaphragm is driven with transverse oscillating motion, means (11, 12) for making use of said motion being coupled to said trailing edge.

2. A generator according to claim 1, wherein the diaphragm (5) is constituted by a sheet of deformable material.

3. A generator according to claim 1, wherein the diaphragm (5) is constituted by a sheet of elastically deformable material.

4. A generator according to claim 1, wherein the diaphragm (15) comprises a plurality of slats (16) that are hinged to one another.

5. A generator according to claim 1, wherein the diaphragm (15) comprises a plurality of slats (16) that are fastened to a deformable structure that is the seat of a traveling wave.

6. A generator according to claim 5, wherein the deformable structure is elastic.

7. A generator according to claim 5, wherein the deformable structure oscillates about an axis.

8. A generator according to claim 1, including a deflector (19) mounted upstream and/or downstream of the duct in order to increase the power delivered by the fluid.
